# EUROPEAN PATENT SPECIFICATION

(11) **EP 1 445 459 B1**
(45) Date of publication and mention of the grant of the patent: **30.11.2005**
(21) Application number: 04250253.4
(22) Date of filing: 19.01.2004
(51) Int. Cl.: F02D 41/20, H01L 41/04

(54) **Control method for a piezoelectric actuator**
Verfahren zum Steuern eines Piezoantriebes
Méthode de commande d'un actionneur piézoélectrique

(30) Priority: 17.01.2003 EP 03250296
(43) Date of publication of application: 11.08.2004
(73) Proprietor: Delphi Technologies, Inc., Troy, MI 48007 (US)
(72) Inventor: Cooke, Michael P., Gillingham, Kent ME7 1DR (GB)
(74) Representative: Hopley, Joanne Selina

(56) References cited:
- EP-A- 1 138 915
- WO-A-02/50413
- DE-A- 10 114 421
- US-B1- 6 328 019
- PATENT ABSTRACTS OF JAPAN vol. 018, no. 188 (E-1532), 31 March 1994 (1994-03-31) -& JP 05 344755 A (TOYOTA MOTOR CORP), 24 December 1993 (1993-12-24)

## Description

The present invention relates to a control method for a piezoelectric actuator and, in particular, to a control method for a piezoelectric actuator of the type used in a fuel injector for delivering fuel to a combustion space of a compression ignition internal combustion engine.

In a known piezoelectrically operable fuel injector, for example as shown in our co-pending European patent application EP 0 995 901A, a piezoelectric actuator is operable to control the position occupied by a control piston for controlling the pressure of fuel within a control chamber. A surface of an injector valve needle is exposed to fuel pressure within the control chamber so that when fuel pressure within the control chamber is relatively high, the needle is urged into a closed, non-injecting state in which fuel delivery to the engine is prevented. If fuel pressure within the control chamber is reduced, the valve needle is caused to lift to an open, injecting state to initiate fuel injection. By controlling fuel pressure within the control chamber by means of the piezoelectric actuator, the injector can therefore be switched between injecting and non-injecting states.

The piezoelectric actuator includes a stack of elements formed from a piezoelectric material, across which a voltage is applied to vary the length of the piezoelectric stack. The application of a first voltage across the stack causes the stack to be energised to a first energisation level, and its length is relatively short. The application of a second voltage across the stack causes the stack to be energised to a second, higher energisation level, and the length of the piezoelectric stack is increased (i.e. the stack is displaced). By varying the energisation level of the piezoelectric stack, movement of the control piston can therefore be controlled to cause movement of the injector valve needle between its injecting and non-injecting states. The voltages applied to the stack are selected to provide displacement of the stack through an amount that gives the required extent of movement of the control piston to switch the injector valve needle between its injecting and non-injecting states.

It has been recognised that the amount of stack displacement achieved in switching between two selected energisation levels varies throughout the life of the actuator. Thus, when an actuator is initially used, a greater stack displacement is achieved in switching between voltage levels V1 and V2, for example, than will be achieved after several hours of actuator running time. It has been found that the greatest change in the displacement characteristic of the stack occurs during the initial hours of running, after which the displacement characteristic tends to stabilise.

This problem has to be addressed as it is important to ensure the maximum required displacement of the stack can be achieved throughout the full service life of the injector. To overcome this problem it is known to 'over-drive' the actuator so that initial displacement of the actuator is greater than the maximum required displacement, but so that this maximum required displacement can still be achieved following several hours of actuator use. It is a disadvantage of this solution, however, that the actuator can be damaged by over-driving so that the service life of the actuator, and hence of the injector, is reduced. Furthermore, there is a limit to the maximum voltage that can be applied to the actuator before dielectric breakdown occurs, and also due to limitations in the drive circuits or the acceptable tensile stress in inactive parts of the stack or its external electrodes. This places a limit on the maximum displacement that can be achieved with a new actuator.

It is an object of the present invention to alleviate or overcome the problems associated with the change in displacement characteristic of a piezoelectric actuator throughout its service life, whilst alleviating or avoiding the shortcomings of known techniques to address this.

According to a first aspect of the present invention, a method of operating a piezoelectric actuator including a stack of one or more elements of piezoelectric material comprises; at a first time (i) varying the charge across the stack between a first positive charge level and a first negative charge level so as to displace the stack through a first amount (ii) measuring a first charge difference between the first positive charge level and the first negative charge level and (iii) determining a first operating characteristic of the actuator, and
subsequently, at a later time, varying the charge across the stack between a second positive charge level and a second negative charge level so as to displace the stack through a second amount,
whereby the second positive and negative charge levels are selected in dependence upon the first operating characteristic and such that the difference between the second positive charge level and the second negative charge level is substantially the same as the first charge difference, thereby to ensure the second amount through which the actuator is displaced is substantially the same as the first amount.

It will be appreciated that the charge itself may be varied directly to adjust the charge across the stack between the positive and negative charge levels, or alternatively another control parameter, for example, voltage may be varied to give the required change in charge level.

In one embodiment, for example, the method may include applying a current through the actuator, measuring the voltage and current applied to the actuator and measuring the first and second, positive and negative charge levels by integrating an instantaneous value for current with respect to time.

The invention permits a substantially constant actuator displacement to be maintained throughout the life of the actuator by compensating for variations in the actuator displacement characteristic as the actuator ages. The method also provides the benefit that substantially the maximum actuator stroke or displacement can be achieved at all stages of operation. It is one advantage of the invention that there is a requirement only to measure the voltage and charge across the stack whilst the actuator is operational, but no need to measure actuator displacement which is a difficult and costly parameter to measure.

The method may include determining, at the first time, an operating characteristic that is a voltage-charge characteristic by measuring the voltage across the stack as a function of the charge across the stack.

The piezoelectric material typically has a reverse polarisation voltage level at which reverse polarisation occurs. In one preferred embodiment, the method includes selecting the first negative charge level such that the voltage across the stack at the first negative charge level is just greater than (i.e. less negative than) the reverse polarisation voltage level, thereby to avoid reverse polarisation of the material.

The voltage level at which reverse polarisation of the piezoelectric material occurs may vary as the actuator ages, and also in dependence upon several other factors, including temperature. The reverse polarisation voltage level for a new actuator can be pre-determined from test measurements, and this value is stored in software so that selection of the first negative charge level, in use, is such that the reverse polarisation voltage is avoided.

In a further preferred embodiment, the method includes selecting the first positive charge level such that the voltage across the stack at the first positive charge level is less than the maximum positive voltage level at which dielectric breakdown of the piezoelectric material occurs.

In a still further preferred embodiment of the invention, the method may further include selecting the second negative charge level such that a voltage-charge characteristic at the selected second negative charge level has a gradient (i.e. rate of change of voltage with charge, dV/dQ) which is substantially equal to a gradient of the first voltage-charge characteristic at the first negative charge level.

It will be appreciated that the method may alternatively include selecting the second negative charge level such that a charge-voltage characteristic at the selected second negative charge level has a gradient (i.e. rate of change of charge with voltage, dQ/dV) that is substantially equal to a gradient of a first charge-voltage characteristic at the first negative charge level.

In an alternative embodiment of the invention, the method may further include selecting the second positive charge level such that voltage-charge characteristic at the selected second positive charge level has a gradient (dV/dQ) substantially equal to a gradient of the first voltage-charge characteristic at the first positive charge level. As before, alternatively the charge-voltage characteristic may be used as the operating characteristic so that the rate of change of charge with voltage (dQ/dV) is used to determine the second positive charge level. Typically, whether to measure dQ/dV or whether to measure dV/dQ will be selected in dependence upon the electric drive circuit for the actuator. If the natural characteristic of the drive circuit is to generate a voltage level, then it is preferable to measure dQ/dV. If the natural characteristic of the drive circuit is to generate a charge level, then it is preferable to measure dV/dQ.

By assuming that the gradient at the maximum negative or positive charge level remains substantially constant, and by assuming the difference between the first and second charge levels at corresponding ends of the stroke is substantially constant at all times, it is possible to control the magnitude of actuator displacement to be substantially the same throughout its life. The method does not require measurement of actuator displacement and enables the maximum possible stroke or displacement of the stack to be utilised. The method also avoids the maximum negative voltage at which reverse polarisation occurs and the maximum positive voltage at which dielectric breakdown occurs.

The step of determining the operating characteristic at the first time may include referring to a pre-stored operating characteristic of the actuator or may include measuring the operating characteristic in real-time. The pre-stored operating characteristic may be a voltage-charge characteristic (i.e. a data set relating the voltage applied across the stack to the charge across the stack).

The method may further comprise measuring an operating parameter at the later time and adjusting the selected second positive and negative charge levels by a relatively small amount so as to maximise or minimise the operating parameter whilst maintaining the difference between the second positive and negative charge levels at substantially the same value as the first charge difference.

For example, for an actuator in which the voltage is applied across the stack by an actuator drive circuit, the method may include measuring an operating parameter in the form of the energy dissipated in the drive circuit and adjusting the selected second positive and negative charge levels until a minimum in the measured dissipated energy is achieved. By allowing the selected second positive and negative charge levels to be varied slightly, whilst maintaining a constant charge difference across the stack, and by monitoring the energy dissipated in the actuator drive circuit until the minimum dissipated energy point is found, it is possible to optimise actuator efficiency.

Again it will be appreciated that the charge itself may be adjusted directly to adjust the charge across the stack for the purpose of performing the minimisation routine, or alternatively another control parameter, such as voltage, may be varied which has the effect of adjusting the charge across the stack.

In an alternative embodiment of this aspect of the invention, the total energy consumption of the stack may be measured and the selected second positive and negative charge levels may be adjusted so as to minimise said consumed energy measurement.

According to a second aspect of the invention, a method of operating a piezoelectric actuator including a stack of one or more elements of piezoelectric material comprises; varying the charge across the stack between a first positive charge level and a first negative charge level at a first time so as to displace the stack through a first amount between a positive end of stroke and a negative end of stroke, subsequently, at a later time, varying the charge across the stack between a second positive charge level and a second negative charge level so as to displace the stack through a second amount, whereby the second positive and negative charge levels are selected to ensure loss of actuator displacement at the positive end of stroke at the later time is substantially compensated by the gain in actuator displacement at the negative end of the stroke at the later time.

This aspect of the invention provides the advantage that any loss of stroke at the positive-voltage/charge end of the stroke as the actuator ages is compensated for by the gain in actuator displacement at the negative-voltage/charge end of the stroke.

The piezoelectric material typically has a reverse polarisation voltage level at which reverse polarisation occurs and the method may include selecting the first negative charge level such that the corresponding voltage level is just greater than (i.e. less negative than) the reverse polarisation voltage level, thereby to avoid reverse polarisation of the material. Also, the maximum positive charge level is preferably selected such that the corresponding voltage level is less than that at which dielectric breakdown of the piezoelectric material occurs.

According to a third aspect of the invention, a method of operating a piezoelectric actuator including a stack of one or more elements of piezoelectric material comprises; varying the charge across the stack between a first positive charge level and a first negative charge level at a first time so as to displace the stack through a first amount, subsequently, at a later time, varying the charge across the stack between a second positive charge level and a second negative charge level so as to displace the stack through a second amount, whereby the second positive and negative charge levels are selected in accordance with a pre-determined operating characteristic of the actuator, thereby to ensure the second amount through which the actuator is displaced is substantially the same as the first amount.

In one embodiment of this aspect of the invention, the method may include selecting the second positive and negative charge levels in accordance with a pre-determined operating characteristic that is dependent upon one or more of the following conditions: age of the actuator, frequency of use of the actuator, temperature of the actuator, average period of time for which the positive charge level is applied to the stack, average period of time for which the negative charge level is applied to the stack.

A controller may be provided for controlling a piezoelectric actuator including a stack of one or more elements of piezoelectric material, wherein the controller comprises control means for (i) varying, at a first time, the charge across the stack between a first positive charge level and a first negative charge level so as to displace the stack through a first amount, (ii) for measuring a first charge difference between the first positive charge level and the first negative charge level, (iii) for determining a first operating characteristic of the actuator, and (iv) for subsequently, at a later time, varying the charge across the stack between a second positive charge level and a second negative charge level so as to displace the stack through a second amount, and further comprising means for selecting the second positive and negative charge levels in dependence upon the first operating characteristic and such that the difference between the second positive charge level and the second negative charge level is substantially the same as the first charge difference, thereby to ensure the second amount through which the actuator is displaced is substantially the same as the first amount.

A controller or processor by which a method of controlling the piezoelectric actuator may be applied to the actuator that the ensures actuator displacement is maintained at a substantially constant value throughout the service life.

The controller may also be provided with means for performing the preferred and optional features set out by the methods described in this document.

For the purpose of this specification, the phrase "new actuator" shall be taken to mean an actuator that has not been in operation for any substantial period of time such that its displacement characteristic is substantially the same as when it was operated for the first time (i.e. the initial displacement characteristic). The phrase "older actuator" or "aged actuator" shall be taken to mean an actuator which is at a stage in its service life where the displacement characteristic has altered from the initial displacement characteristic, but is not intended to be limited to an actuator that is at the end of its service life.

The method is particularly suitable for use with an actuator forming part of a fuel injector having a valve needle for controlling fuel injection to an associated engine, and whereby a variation in the charge level between the first positive charge level and the first negative charge level, and between the second positive charge level and the second negative charge level, causes movement of the valve needle between injecting and non-injecting states. It will be appreciated that, depending upon the injector design, the actuator may be configured such that injection occurs towards either the positive or negative end of the actuator stroke.

The invention will now be described, by way of example only, with reference to the accompanying drawings in which:
Figure 1 is a sectional view of a piezoelectrically operable fuel injector of the type including a piezoelectric actuator to which the method of the present invention may be applied,
Figure 2 is an enlarged view of an upper portion of the piezoelectrically operable fuel injector in Figure 1,
Figure 3 is an enlarged view of a middle portion of the piezoelectrically operable fuel injector in Figure 1,
Figure 4 is a graph showing actuator displacement as a function of applied voltage to illustrate the variation in the displacement characteristic of a piezoelectric actuator of the type forming part of the injector in Figures 1 to 3,
Figure 5 is a graph showing actuator displacement as a function of applied voltage to illustrate one embodiment of a method for compensating for the variation in the displacement characteristic as the actuator ages in use,
Figure 6 is a graph showing actuator displacement as a function of applied voltage to illustrate an alternative embodiment of the compensation method to that illustrated in Figure 5,
Figures 7 and 8 are graphs showing actuator displacement as a function of charge to illustrate respective further alternative embodiments of the compensation method to those illustrated in Figures 5 and 6,
Figure 9 is a graph showing voltage against charge for a piezoelectric actuator having the displacement characteristic shown in Figure 4, to illustrate one implementation of the compensation method illustrated in Figure 8,
Figure 10 is a flow diagram illustrating the steps of operation of one embodiment of the compensation method illustrated in Figures 8 and 9,
Figure 11 is a flow diagram illustrating the steps of operation of a further preferred embodiment of the compensation method illustrated in Figures 8 and 9, and
Figure 12 is a graph to compare the energy consumption of a new actuator with that of a relatively old actuator as a function of the voltage applied across the actuator.

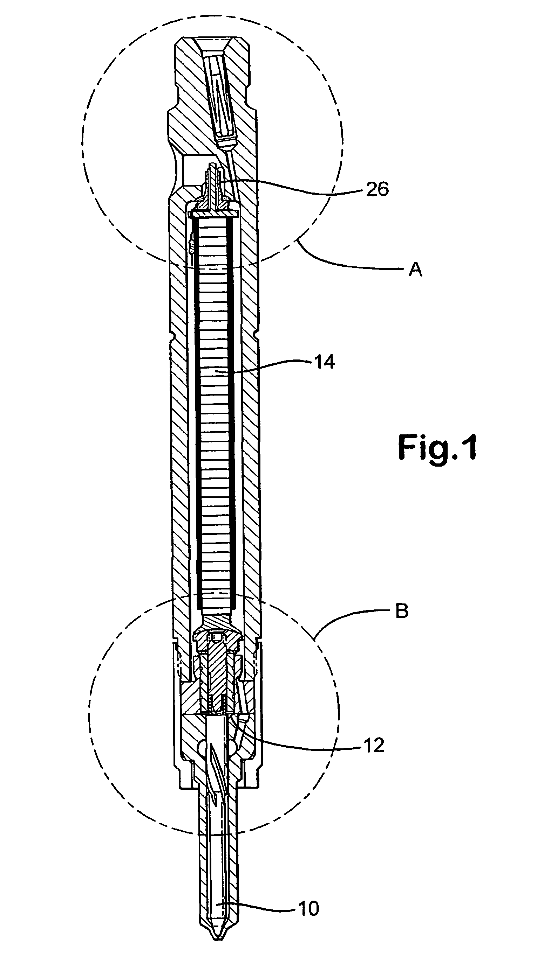

Referring to Figures 1 to 3, a fuel injector of the piezoelectrically operable type typically includes a valve needle 10 that is engageable with a seating to control fuel delivery to an associated engine cylinder. A surface associated with the valve needle 10 is exposed to fuel pressure within a control chamber 12. The valve needle 10 is moveable between a first position in which it is engaged with its seating and a second position in which the valve needle is lifted from its seating. When the valve needle 10 is in its first seated position fuel injection does not occur, and when it is moved away from its first position towards its second position injection is commenced.

The injector includes a hydraulic amplifier arrangement including a control piston 18 that is operable to vary the volume of the control chamber 12. Movement of the control piston 18 is controlled by means of a piezoelectric actuator arrangement including a stack 14 of one or more elements formed from a piezoelectric material. The actuator stack 14 carries, at its lower end, an anvil member 16 that is coupled to the control piston 18 through a load transmitting member 20. By controlling the length of the actuator stack 14, and hence the position of the control piston 18, movement of the valve needle is controlled between its seated and unseated positions, with the change in displacement of the stack 14 being amplified to move the valve needle 10 through an amount determined by the characteristics of the hydraulic amplifier arrangement. A spring 22 serves to urge the valve needle 10 against its seating, and the biasing force of the spring is set by adjustment of a screw threaded rod 24 that passes through the control piston 18.

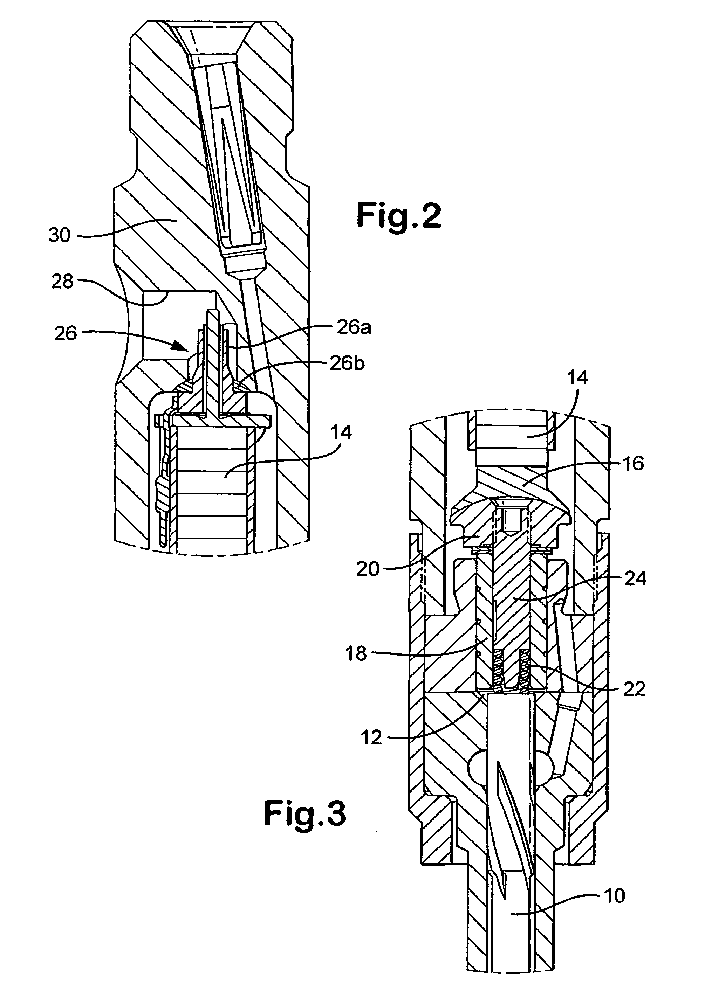

As can be seen most clearly in Figure 2, the uppermost end of the actuator stack 14 is secured to an electrical connector 26 including first and second terminals 26a, 26b that extend into a radial drilling 28 in an actuator housing 30 to permit appropriate electrical connections to be made to control the piezoelectric actuator. When a first relatively high voltage is applied across the actuator stack 14, the piezoelectric material is energised to a first, higher energisation level and the length of the stack is relatively long. In this position the valve needle 10 occupies a position in which it is seated (i.e. a non-injecting state). When a second, relative low voltage is applied the actuator stack 14, the piezoelectric material is energised to second, lower energisation level and the length of the stack 14 is reduced. The actuator is therefore displaced, with the result that the valve needle 10 is cause to lift away from its seating (i.e. an injecting state). Between the first and second energisation levels the actuator stack 14 is said to have a "stack displacement" or "stroke" that is equal to the change in length of the stack 14 between the two energisation levels. The voltages and/or other control signals are supplied to the actuator by means of a computer processor or engine controller (not shown) in a conventional manner. Further constructional and operational details of the injector in Figures 1 to 3 are described in our co-pending patent application EP 0995901 A1 and so will not be described in further detail here.

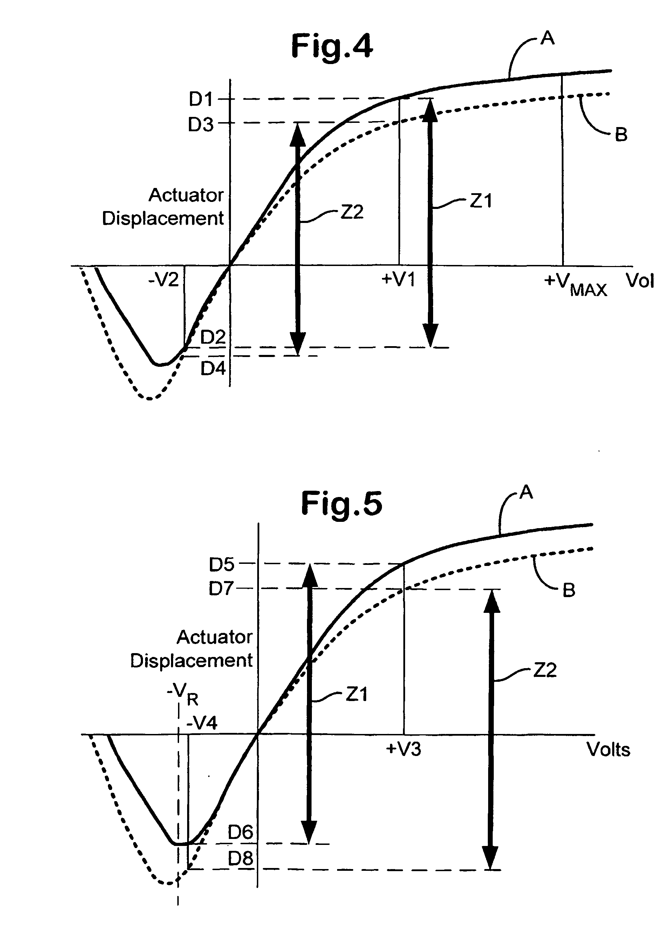

In fuel injectors generally of the aforementioned type, it is important to achieve as high a stack displacement as possible throughout the full service life of the injector, although the actual position of the stack is less important. Figure 4 represents the actuator displacement of a piezoelectric stack 14 as a function of the voltage applied across the stack. Line A (solid line) represents the initial actuator displacement characteristic (i.e. displacement as a function of applied voltage) for a new actuator and line B (dashed line) represents the later actuator displacement characteristic for an older actuator towards the end of its service life. The actuator is energised to its first energisation level by applying a positive voltage, +V1, across the piezoelectric stack 14 and is de-energised to a second energisation level by reducing the voltage across the stack 14 to a negative voltage level, - V2. When the actuator is new (line A) a reduction in the voltage across the stack from +V1 to -V2 causes the actuator to be displaced between positions D1 (voltage level +V1) and D2 (voltage level -V2) and is therefore displaced by an amount indicated by arrow Z1. When the actuator is operating towards the end of its service life (line B), a change in voltage across the stack between voltage level +V1 and voltage level -V2 moves the actuator from position D3 to D4, and the actuator is therefore displaced by an amount indicated by arrow Z2. It can be seen by comparing the arrow lengths, Z1 and Z2, that the actuator displacement is reduced for an older actuator to which the same change of voltage is applied. It is not therefore possible to operate the actuator between fixed voltage limits, +V1 and -V2, throughout its full service life if it is required to maintain a substantially constant, maximum actuator displacement at all times.

One way to avoid this problem is to operate the actuator between variable voltage levels, using the gain in displacement at the negative-voltage end of the stroke to compensate for the lost displacement at the positive-voltage end of the stroke (the positive- or negative-voltage end of stroke may also be referred to as the positive-charge or negative-charge end of stroke, as the positive or negative end of stroke, or as the positive- or negative-displacement end of stroke). The effect is illustrated in Figure 5, which shows the actuator displacement Z1 for a new actuator (line A) compared to the actuator displacement characteristic for an older actuator (line B). If voltage levels +V3 and -V4 are applied to a new actuator, then the actuator displacement is between D5 and D6, giving a stroke length indicated by arrow Z1. For the older actuator, a change in voltage between +V3 and -V4 gives rise to an actuator displacement between D7 and D8 and the magnitude of the displacement (as indicated by arrow Z2) is substantially equal to that of arrow Z1. This is because the loss of actuator displacement at the positive voltage end of the stroke as the actuator ages is compensated for by the increase in actuator displacement at the negative-voltage end of the stroke. Hence, by careful selection of the actuation voltages +V3, -V4, it is possible to maintain the actuator displacement at a substantially constant value throughout its operational life.

This scheme only offers a solution in certain circumstances, however, as for many actuators it is not possible to select a large enough negative voltage, -V4, to compensate for the loss of displacement at the positive voltage end of the stroke without entering the voltage region in which the piezoelectric material starts to reverse polarise. Reverse polarisation of the material occurs around the minimum of the voltage-displacement characteristic, at voltage -V_{R}. In order to drive the actuator at more negative voltages, an excess of energy is required making operation in this region inefficient. Furthermore, operating the actuator at voltage levels more negative than the reverse polarisation level can cause damage to the piezoelectric material. It is a further problem that the reverse polarisation voltage of a piezoelectric material is temperature sensitive, so that any selection of the maximum negative operating voltage to avoid reverse polarisation has to allow for the effects of temperature variation. As a consequence, this technique for compensating for changes in the displacement throughout actuator life may not be sufficiently exact.

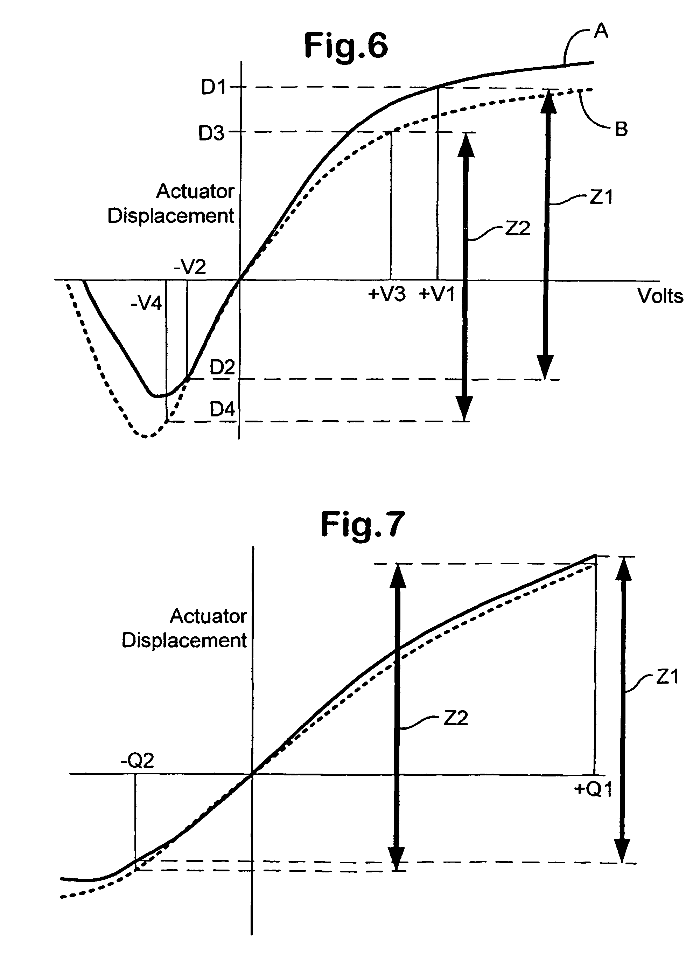

Figure 6 illustrates an alternative technique to compensate for changes in actuator displacement throughout the actuator service life. Prior to installation in the engine, a number of piezoelectric actuators are tested to determine how the actuator displacement characteristic varies over time. As before, line A represents the actuator displacement characteristic for a new actuator (i.e. when it is first operated), and line B represents the actuator displacement characteristic for the same actuator after it has been operated for a long period of time. The measured displacement and corresponding voltage values are stored in a look-up table or data map in the processor memory. A control algorithm is implemented, in use, in which different voltage values are selected from the look-up table in dependence upon the measured displacement of the actuator. Thus, one way of implementing this idea is to measure the actuator displacement, and to adjust the applied voltage continually in response to the measured displacement. In this way, when the actuator is new and operates between voltage +V1 and - V2 the displacement is indicated by arrow Z1. If the displacement is found to decrease when operating between these levels, the voltage levels are adjusted until the new levels +V3 and - V4 are found to give substantially the same displacement (as indicated by arrow Z2). In some circumstances, however, the method of measuring actuator displacement, and adjusting the voltage and charge levels in response, may be difficult to implement as actuator displacement is difficult and expensive to measure in an operational system.

In practice, if the actuator displacement characteristic is found to be predictable, one way of implementing this scheme is to pre-test actuators under a number of different operating conditions and to store appropriate conditions-based look-up tables of data for use with the control algorithm. For example, the displacement characteristic of an actuator that is used frequently and for long continuous periods of time may vary from that of an actuator that is used less frequently and for shorter periods of time. Thus, it may be necessary to test actuators and store data in dependence upon the length of time for which with actuator has been in operation and the frequency of operation. In theory, such a scheme permits the actuator displacement to be maintained at a substantially constant level throughout its service life. Other possible conditions that may affect the actuator displacement characteristic include the average period of time for which the stack has a positive charge across it, the average period of time for which the stack has a positive charge across it, and the average operating temperature.

It is desirable for the voltage levels to be selected so that the negative voltage at which reverse polarisation of the piezoelectric material occurs is avoided at all stages of actuator operation. Similarly, there is a positive voltage at which dielectric breakdown of the material occurs and it is desirable for the positive voltage levels to be selected so as to avoid the dielectric breakdown at all stages of actuator operation. The controller may be programmed so as to ensure the selected voltage levels do not exceed the reverse polarisation and the dielectric breakdown limits at all stages of actuator life. In practice, however, the limit on the positive voltage that can be applied to the actuator may be determined by the capability of the controller.

It is a possible disadvantage of this method that in order to adjust the voltage levels accurately for the many different operational conditions that exist in practice, it is necessary to carry out sophisticated endurance testing and to store a large amount of data in the processor memory.

It has been found that a more linear actuator displacement characteristic is achieved by operating the actuator with a "constant charge difference". This is illustrated in Figure 7, which shows actuator displacement as a function of charge for both a new actuator (line A) and an older actuator (line B). It can be seen by comparing lines Z1 and Z2 that a change in charge level between +Q1 and -Q2 for the new actuator gives rise to substantially the same actuator displacement when the actuator has aged.

In one embodiment the operating charge levels are set at values +Q1 and -Q2 when the actuator is new, and this gives rise to a displacement indicated by arrow Z1. The charge level -Q2 is selected to ensure that reverse polarisation of the piezoelectric material is avoided, both when the actuator is new and when it is well into its life. This method enables a near constant actuator displacement to be achieved throughout the service life of the actuator, although the maximum stroke is compromised to some extent by the need to set a conservative value for the maximum negative charge level (-Q2) to be sure reverse polarisation level is avoided at all stages of actuator operation, even when the actuator displacement characteristic has altered.

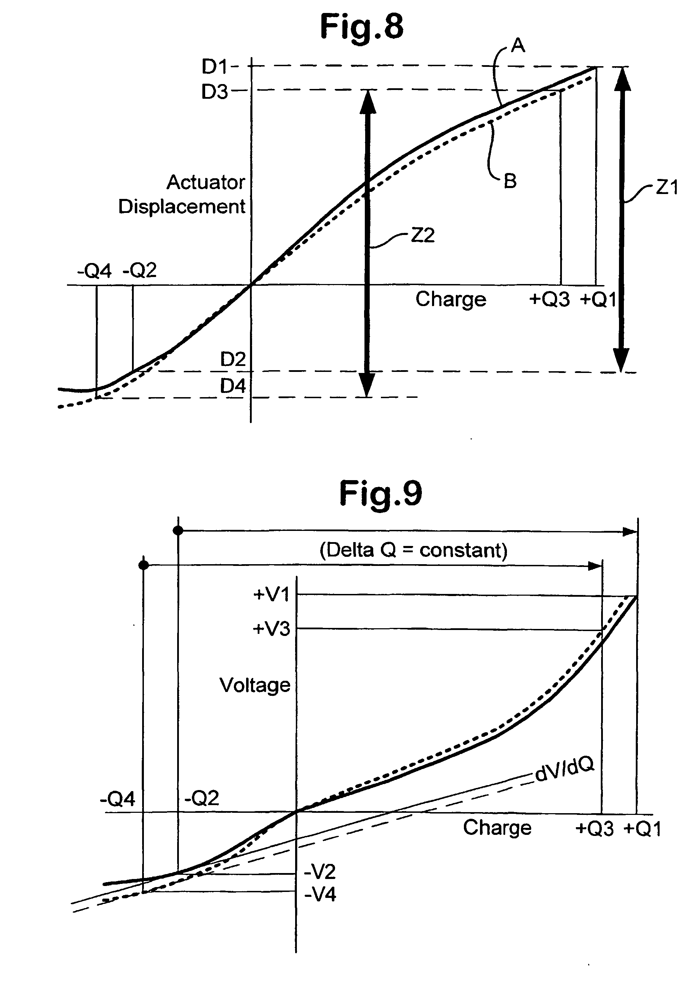

A further preferred embodiment is described with reference to Figures 8 and 9, and involves changing the charge levels throughout the life of the actuator so as to always select the negative charge level to be as close as possible to the reverse polarisation charge, but without exceeding it, and by maintaining a substantially constant change of charge between the selected negative and positive levels. Appropriate charge levels +Q1 and -Q2, and their associated voltage values +V1, -V2, are selected by reference to pre-determined displacement measurements for a new actuator to provide substantially the maximum possible actuator displacement whilst ensuring the negative charge level, -Q2, has a less negative value than the maximum negative charge for which reverse polarisation occurs. At the positive-voltage end of the stroke the voltage is selected so as not to exceed the level at which reverse polarisation of the material occurs (unless the controller itself imposes a lower limit on the maximum voltage that can be applied).

Figure 8 shows the displacement characteristic for a new actuator (line A), which has a stroke length or actuator displacement indicated by arrow Z1 when the charge level is changed between +Q1 and -Q2. The displacement characteristic for an older actuator (line B) is also shown, and it can be seen that substantially the same stroke length is obtained for this actuator (as indicated by arrow Z2) when the charge level is changed between +Q3 and -Q4. The difference in charge between +Q1 and -Q2 and between +Q3 and -Q4 is substantially the same (referred to as a constant charge-difference condition), and the actuator is said to be operated with "constant charge". This embodiment of the present invention makes use of this characteristic of piezoelectric actuator behaviour and avoids the need to measure the instantaneous actuator displacement characteristic.

One way to implement constant charge operation is to first determine the appropriate charge levels, +Q1 and - Q2, when the actuator is initially used based on pre-determined measurements of the charge-displacement characteristic for a new actuator, and to then predict the actuator charge-displacement characteristic of an older actuator by making two assumptions; (i) the actuator displacement is linear for constant charge operation and (ii) the gradient, dV/dQ, at the maximum negative charge level at which the actuator can be operated (before reverse polarisation occurs) remains substantially constant throughout the actuator service life (referred to as a "constant gradient condition").

Figure 8 illustrates the constant charge-difference condition, as described previously, and Figure 9 shows the voltage-charge characteristic for a new actuator (line A) compared to that for an older actuator (line B), from which it can be seen that at the maximum negative charge levels -Q2, -Q4 for the new and older actuators respectively, the gradient (dV/dQ) of the characteristic is substantially the same.

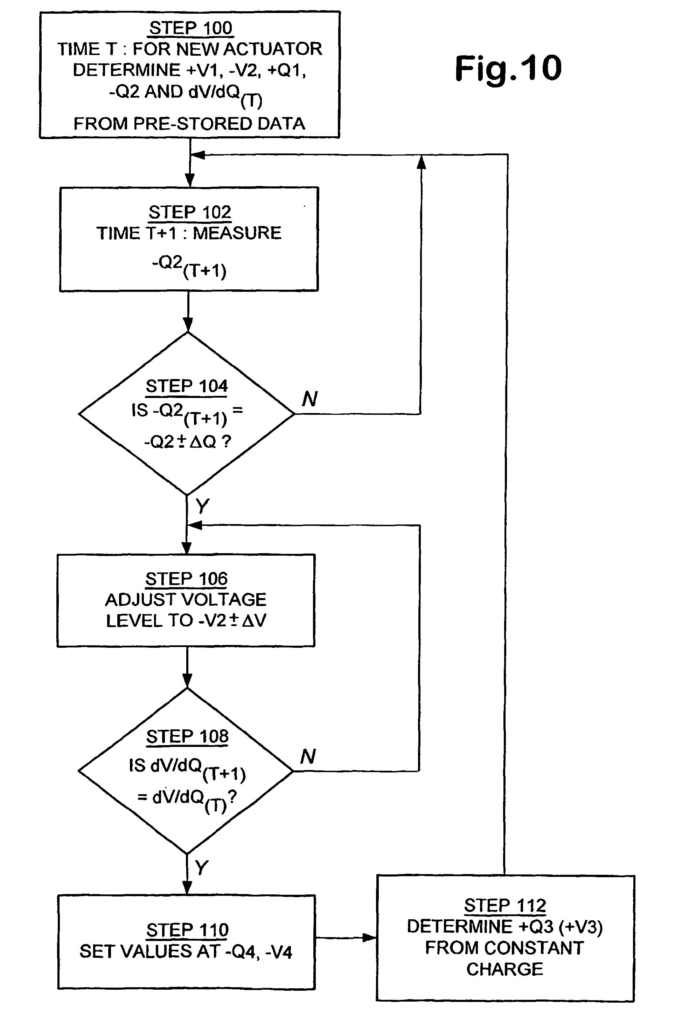

The method steps of operation of one embodiment of this method will now be described in further detail with reference to the flow diagram in Figure 10. Where it is necessary to measure the voltage, V, that is applied to the stack 14, this can be done directly using a suitable voltage measurement circuit. Where it is necessary to measure the charge, Q, this can also be done directly by integrating the current driving the stack with respect to time. In a drive circuit of the type in which pulses of charge are transferred to the actuator, the current trace may suffer from too high a noise level to measure charge directly, in which case the charge can be measured by knowing the charge transfer characteristic of the drive circuit for each pulse and by multiplying this by the number of pulses. Both voltage and charge measurements can therefore be made relatively easily.

Referring to Figure 10, at time T (step 100), appropriate values for +V1 and -V2 are selected from a pre-stored actuator voltage-displacement characteristic for a new actuator, avoiding the reverse polarisation voltage at the negative-voltage end of the stroke and the dielectric breakdown voltage at the positive voltage end of the stroke. Corresponding values of +Q1, -Q2 are selected, with the charge levels at time T being referred to as +Q1_{T} and -Q2_{T}.

After a pre-determined time T+1 (step 102), and with the voltage across the stack being varied between levels +V1, -V2 to cause the actuator to be displaced between its first and second states, the corresponding charge, -Q2_{T+1} , is measured. If, at step 104, -Q2_{T+1} is substantially the same as -Q2_{T}, it is assumed that the actuator displacement characteristic has not changed substantially and the voltage and charge levels +V1, -V2, +Q1, -Q2 are maintained for operation at time T+1 at the same values as for operation at time T.

If, at step 104, the charge is found to have deviated by a significant amount, ΔQ, from - Q2_{T}, the voltage level -V2 is adjusted by an amount ΔV and the corresponding charge is measured again. By assuming the gradient, dV/dQ, of the voltage-charge characteristic for a new actuator at time T, at a charge of -Q2_{T} (i.e. the rate of change of charge with voltage at time T), is substantially the same as the gradient, dV/dQ, for the actuator at charge level -Q2(_{T+1}) at time T+1, the process of adjusting the voltage level (and hence the charge level) can be repeated continuously (steps 106, 108) until appropriate values for the charge and voltage are determined (step 110). These values correspond to charge level -Q4 and voltage -V4 in Figures 8 and 9. It will be appreciated that for steps 106 and 108 of the method illustrated in Figure 10, the voltage level -V2_{(T+1)} is increased or decreased by an amount ΔV until values of voltage and charge (-V4, -Q4) are determined that satisfy the constant gradient condition.

Having determined appropriate values for -V4 and -Q4, the appropriate positive charge level, +Q3, is determined at step 112 by assuming that the constant charge-difference condition applies (i.e. the displacement for a change in charge between +Q1 and -Q2 for the actuator at time T is the same as the displacement for a change in charge between +Q3 to -Q4 for the actuator at time T+1).

The method may also be implemented by using a charge-voltage characteristic, so that a gradient dQ/dV is used to determine the second positive or negative charge level. It is appropriate to use the gradient dQ/dV to determine the second positive or negative charge level where the drive circuit has a natural characteristic of generating a voltage level. If the drive circuit has a natural characteristic of generating a charge level, then it is more appropriate to use the gradient dV/dQ to determine the second positive or negative charge level.

The method steps of Figure 10 may be repeated at regular intervals during operation of the actuator. For example, if processor time permits, the method steps may be repeated continuously, such that the levels of -V3, -Q3 are continually adjusted so as to compensate for variations in the actuator displacement characteristic as the actuator is aged. Alternatively the method steps may be repeated at regular intervals, say every 10 minutes or so. During initial operation of the actuator in particular it may be appropriate to adjust the levels frequently, as it is during this stage of actuator life that the most significant change in the displacement characteristic occurs.

As a further alternative, the voltage and charge levels may be adjusted just once or a few times during the service life, although this is less desirable for most practical embodiments.

As an alternative to selecting the initial values of +V1, -V2 at time T from pre-determined data, real-time measurements of charge may be made corresponding to the selected voltage value or real-time measurements of voltage may be made corresponding to the selected charge value.

In a further alternative embodiment to that described with reference to Figure 10, instead of monitoring the maximum negative charge level, -Q2, the maximum positive charge level, +Q1, may be monitored and an appropriate value for +Q3 is determined by assuming that the gradient dV/dQ of the voltage-charge characteristic remains fixed at this maximum charge point. The negative charge level, -Q4, is then determined by assuming the constant change condition applies, as described previously. This method may be less desirable, however, as there is a less significant change in gradient dV/dQ as a function of charge at the positive end of the stroke, so that the appropriate maximum charge level, +Q3, is less well defined.

A further alternative technique involves measuring the energy dissipated by the stack as a function of the applied voltage, and varying the voltage such that the gradient of the energy-voltage characteristic is at all times maintained at a substantially constant value at the negative or positive voltage end of the stroke. As an alternative to varying the voltage, that charge may be varied so as to maintain the gradient of the energy-charge characteristic at a substantially constant value at the negative or positive voltage end of the stroke.

It will be appreciated that in practice the control parameter for the actuator may be either voltage or charge, so that in order to select the required charge levels either the charge across the stack may be altered directly itself, or the voltage applied across the stack may be altered.

In order to increase the efficiency of injector operation, a modification of the techniques described previously with reference to Figures 9 and 10 may be implemented. As before, appropriate values for +Q1 and -Q2 are initially selected to give the required displacement for a new actuator. At appropriate stages of the actuator service life, values for +Q3 and -Q4 are determined using the dV/dQ measurements and by applying the constant charge-difference condition. The charge and voltage levels are then adjusted incrementally from the selected values, and for each adjustment a measurement is made of the energy dissipated in the actuator drive circuit. The voltage and charge levels are continually adjusted until the dissipated energy measurement is minimised.

At each stage of the adjustment process the voltage and charges levels are allowed to deviate slightly from the selected values, and the dissipated energy is measured. If an energy measurement is found to be less than the preceding one, the voltage and charge levels are adjusted slightly in the same direction (e.g. negative) until the minimum energy point is reached. If an energy measurement is found to be greater than the preceding one, the voltage and charge levels are adjusted slightly in the opposite direction (e.g. positive) until the minimum energy point is reached.

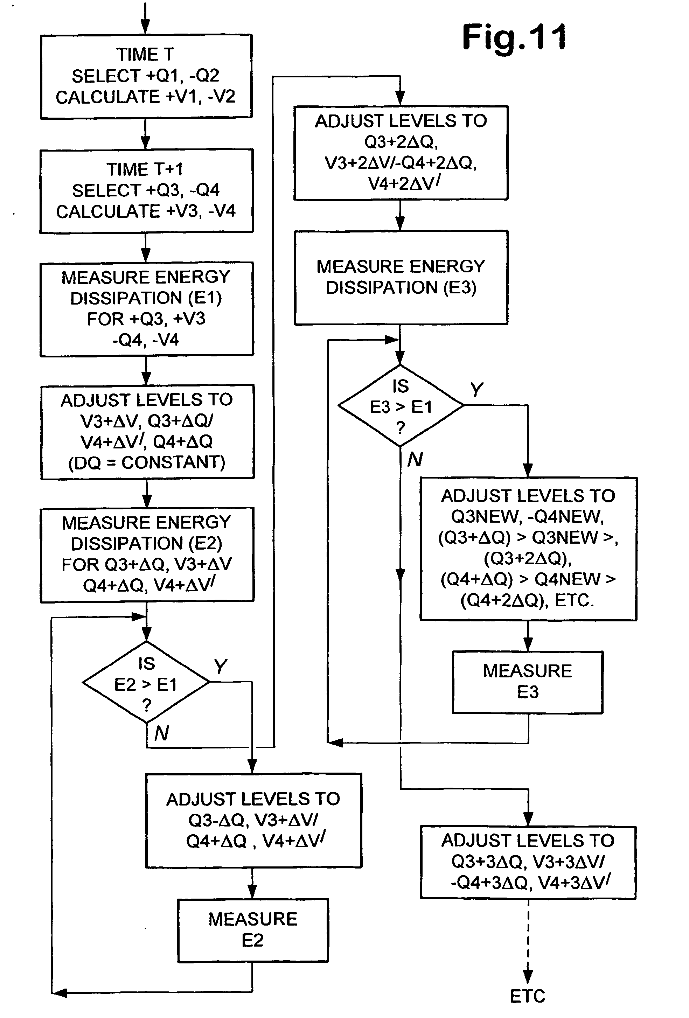

Figure 11 is a flow diagram to illustrate in further detail how the charge and voltage levels +Q1, -V1, +Q2, -V2 and +Q3, +V3, -Q4, -Q4 are selected and adjusted until a minimum energy dissipation measurement is obtained. At all stages the voltage and charge levels are only allowed to deviate by small amounts, ΔQ and ΔV respectively, from the selected values, Q3, -Q4 (as calculated from the dV/dQ characteristic and the constant charge-difference condition), and at all times the change in charge between the positive and negative charge levels is maintained at a constant value.

The energy, E, that is dissipated by the drive circuit can be measured by integrating the instantaneous voltage applied to the stack 14 multiplied by current with respect to time. Alternatively, if the current cannot be measured directly, an estimate of the dissipated energy can be made from the energy per drive pulse characteristic of the drive circuit. In a further alternative technique, the temperature of the heat-sink on the controller may be monitored to provide an estimate of energy dissipation in the drive circuit.

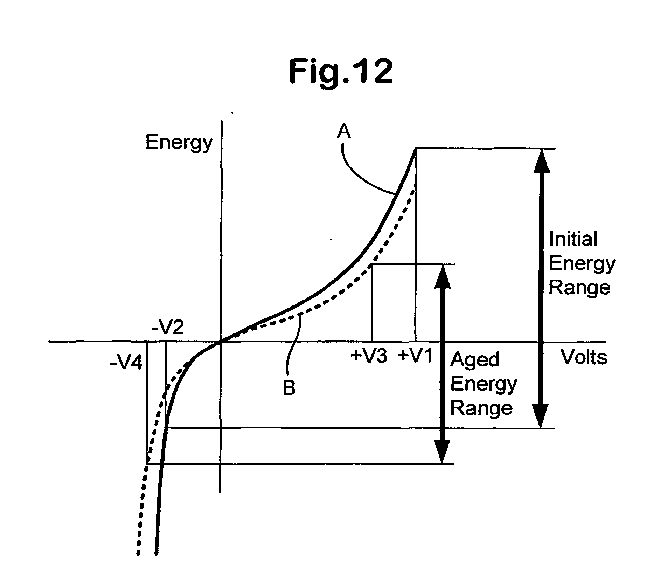

Figure 12 is a graph to illustrate the energy dissipated in the drive circuit as a function of voltage applied to the stack for a new actuator (line A) and an older actuator (line B). It can be seen from Figure 12 that the older actuator consumes less energy than a new actuator having the same actuator displacement (stroke length). This is found to arise as the properties of an older actuator tend away from those of "soft" piezoelectric materials towards those of "hard" piezoelectric materials. A hard piezoelectric material is found to have lower losses due to hysteresis effects than softer piezoelectric materials and can therefore be operated more efficiently.

As an alternative to adjusting the selected charge and voltage levels so as to minimise the energy dissipated in the drive circuit, the charge and voltage levels may be adjusted to minimise the energy supplied to the stack. In a further alternative embodiment, the charge and voltage levels may be adjusted so as to minimise the total energy consumption of the actuator. The choice of which operating parameter is monitored will depend upon which characteristic is considered to be most critical.

It will be appreciated that the control method for operating a piezoelectric actuator described herein is not limited in application to an injector of the type described in Figures 1 to 3, but is suitable for use in the control of any piezoelectrically operable injector. For example, the method may be applied to both direct actuation injectors, such as that shown in Figures 1 to 3, and also in servo-controlled piezoelectrically operable injectors. The method is equally applicable to piezoelectric actuators that are used in applications other than in fuel injection systems, where actual displacement position of the stack is not critical and a constant stroke length is of importance.

## Claims

1. A method of operating a piezoelectric actuator including a stack (14) of one or more elements of piezoelectric material, the method comprising;
at a first time (i) varying the charge across the stack between a first positive charge level (+Q1) and a first negative charge level (-Q2) so as to displace the stack through a first amount (Z1) (ii) measuring a first charge difference between the first positive charge level (+Q1) and the first negative charge level (-Q2) and (iii) determining a first operating characteristic (dV/dQ; dQ/dV) of the actuator, and
subsequently, at a later time, varying the charge across the stack between a second positive charge level (+Q3) and a second negative charge level (-Q4) so as to displace the stack through a second amount (Z2),
whereby the second positive and negative charge levels are selected in dependence upon the first operating characteristic (dV/dQ; dQ/dV) and such that the difference between the second positive charge level (+Q3) and the second negative charge level (-Q4) is substantially the same as the first charge difference, thereby to ensure the second amount (Z2) through which the actuator is displaced is substantially the same as the first amount (Z1).

2. The method as claimed in Claim 1, wherein the charge across the stack (14) is varied between the first and second, positive and negative charge levels by varying one of voltage or charge applied across the stack.

3. The method as claimed in Claim 1 or Claim 2, wherein the piezoelectric material has a reverse polarisation voltage level at which reverse polarisation occurs, the method including selecting the first negative charge level (-Q2) such that the voltage across the stack (14) at the first positive charge level (+Q1) is just greater than the reverse polarisation voltage level, thereby to avoid reverse polarisation of the material.

4. The method as claimed in any one of Claims 1 to 3, wherein the piezoelectric material has a dielectric breakdown voltage level at which dielectric breakdown of the material occurs, the method including selecting the first positive charge level (+Q1) such that the voltage across the stack (14) at the first positive charge level is less than the dielectric breakdown voltage level at all stages of actuator life.

5. The method as claimed in any one of Claims 1 to 4, including determining, at the first time, an operating characteristic that is a first voltage-charge characteristic by measuring the voltage applied across the stack (14) as a function of the charge across the stack (14).

6. The method as claimed in Claim 5, including selecting the second negative charge level (-Q4) such that a voltage-charge characteristic at the selected second negative charge level has a gradient (dV/dQ) substantially equal to a gradient of the first voltage-charge characteristic at the first negative charge level (-Q2).

7. The method as claimed in Claim 5, including selecting the second positive charge (+Q3) level such that voltage-charge characteristic at the selected second positive charge level has a gradient (dV/dQ) substantially equal to a gradient of the first voltage-charge characteristic at the first positive charge level (+Q1).

8. The method as claimed in any one of Claims 1 to 4, including determining, at the first time, an operating characteristic that is a first charge-voltage characteristic by measuring the charge applied across the stack (14) as a function of the voltage across the stack (14).

9. The method as claimed in any one of Claims 1 to 8, including measuring an operating parameter and adjusting the selected second positive and negative charge levels by a relatively small amount (+/-ΔQ) so as to maximise the operating parameter, whilst maintaining the difference between the second positive and negative charge levels (+Q3, - Q4) at substantially the same value as the first charge difference.

10. The method as claimed in any one of Claims 1 to 8, including measuring an operating parameter and adjusting the selected second positive and negative charge levels (+Q3, -Q4) by a relatively small amount (+/-ΔQ) so as to minimise the operating parameter, whilst maintaining the difference between the second positive and negative charge levels (+Q3, -Q4) at substantially the same value as the first charge difference.

11. The method as claimed in Claim 10, including measuring the energy supplied to the actuator and adjusting the selected second positive and negative charge levels (+Q3, - Q4) so as to minimise said supplied energy measurement.

12. The method as claimed in Claim 10, including applying the charge across the stack using a drive circuit, measuring the energy dissipated in the drive circuit and adjusting the selected second positive and negative charge levels (+Q3, -Q4) so as to minimise said dissipated energy measurement.

13. The method as claimed in Claim 10, including measuring the total energy consumption of the stack and adjusting the selected second positive and negative charge levels (+Q3, -Q4) so as to minimise said consumed energy measurement.

14. The method as claimed in any one of Claims 1 to 13, wherein the step of determining the operating characteristic at the first time includes referring to a pre-stored operating characteristic of the actuator.

15. The method as claimed in any one of Claims 1 to 13, wherein the step of determining the operating characteristic at the first time includes measuring the operating characteristic in real-time.

16. The method as claimed in Claim 14 or Claim 15, wherein the step of determining the operating characteristic at the first time includes determining a voltage value and a corresponding charge value.

17. The method as claimed in any one of Claims 1 to 16, including applying a current through the actuator, measuring the voltage and current to the actuator and determining the first and second positive and negative charge levels (+Q3, -Q4) by integrating an instantaneous value for current with respect to time.

18. A method of operating a piezoelectric actuator including a stack (14) of one or more elements of piezoelectric material, the method comprising;
varying the charge across the stack between a first positive charge level (+Q1) and a first negative charge level (-Q2) at a first time so as to displace the stack through a first amount (Z1) between a positive end of stroke and a negative end of stroke, subsequently, at a later time, varying the charge across the stack between a second positive charge level (+Q3) and a second negative charge level (-Q4) so as to displace the stack through a second amount (Z2), whereby the second positive and negative charge levels (+Q3, -Q4) are selected to ensure loss of actuator displacement at the positive end of stroke at the later time is substantially compensated by the gain in actuator displacement at the negative end of the stroke at the later time.

19. The method as claimed in Claim 18, wherein the piezoelectric material has a reverse polarisation voltage level at which reverse polarisation occurs, the method including selecting the first and second negative charge levels (-Q2, -Q4) such that the voltage across the stack has a less negative value than the reverse polarisation voltage level at all stages of actuator operation.

20. The method as claimed in Claim 18 or Claim 19, wherein the piezoelectric material has a dielectric breakdown voltage level at which dielectric breakdown of the material occurs, the method including selecting the first and second positive charge levels (+Q1, +Q3) such that the voltage across the stack is just less than the dielectric breakdown voltage level at all stages of actuator operation.

21. A method of operating a piezoelectric actuator including a stack (14) of one or more elements of piezoelectric material, the method comprising;
varying the charge across the stack between a first positive charge level (+Q1) and a first negative charge level (-Q2) at a first time so as to displace the stack through a first amount (Z1), subsequently, at a later time, varying the charge across the stack between a second positive charge level (+Q3) and a second negative charge level (-Q4) so as to displace the stack through a second amount (Z2), whereby the second positive and negative charge levels (+Q3, -Q4) are selected in accordance with a pre-determined operating characteristics of the actuator, thereby to ensure the second amount (Z2) through which the actuator is displaced is substantially the same as the first amount (Z1).

22. The method as claimed in Claim 21, including selecting the second positive and negative charge levels (+Q3, -Q4) in accordance with a pre-determined operating characteristic that is dependent upon one or more of the following operating conditions: age of the actuator, frequency of use of the actuator, temperature of the actuator, average period of time for which the positive charge level is applied to the stack, average period of time for which the negative charge level is applied to the stack.

23. The method as claimed in any one of Claims 1 to 22, whereby the charge across the stack (14) is varied at the first, the subsequent and a plurality of other times, in use.

24. The method as claimed in Claim 23, whereby the charge across the stack (14) is varied at regular intervals during actuator operation.

25. The method as claimed in any one of Claims 1 to 24, wherein the actuator forms part of a fuel injector having a valve needle (10) for controlling fuel injection to an associated engine, and whereby a variation in the charge level between the first positive charge level (+Q1) and the first negative charge level (-Q2), and between the second positive charge level (+Q3) and the second negative charge level (-Q4), causes movement of the valve needle (10) between injecting and non-injecting states.

## Patentansprüche

1. Verfahren zum Betreiben eines piezoelektrischen Betätigungsorgans, das einen Stapel (14) mit einem oder mehreren Elementen aus piezoelektrischen Material aufweist, wobei das Verfahren umfasst:
zu einem ersten Zeitpunkt (i) das Verändern der Ladung quer über den Stapel hinweg zwischen einem ersten positiven Ladungswert (+Q1) und einem ersten negativen Ladungswert (-Q2), um den Stapel um einen ersten Betrag (Z1) zu versetzen, (ii) Messen einer ersten Ladungsdifferenz zwischen dem ersten positiven Ladungswert (+Q1) und dem ersten negativen Ladungswert (-Q2), und (iii) Festlegen einer ersten Betriebscharakteristik (dV/dQ; dQ/dV) des Betätigungsorgans, und
nachfolgend, zu einem späteren Zeitpunkt, das Verändern der Ladung quer über den Stapel hinweg zwischen einem zweiten positiven Ladungswert (+Q3) und einem zweiten negativen Ladungswert (-Q4), um den Stapel um einen zweiten Betrag (Z2) zu versetzen,
wobei der zweite positive und der zweite negative Ladungswert in Abhängigkeit von der ersten Betriebscharakteristik (dV/dQ, dQ/dV) und derart ausgewählt wird, dass die Differenz zwischen dem zweiten positiven Ladungswert (+Q3) und dem zweiten negativen Ladungswert (-Q4) im Wesentlichen dieselbe ist wie die erste Ladungsdifferenz, um sicherzustellen, dass der zweite Betrag (Z2), um den das Betätigungsorgan versetzt wird, im Wesentlichen derselbe ist wie der erste Betrag (Z1).

2. Verfahren nach Anspruch 1, worin die Ladung quer über den Stapel (14) zwischen den ersten und zweiten, positiven und negativen Ladungswerten verändert wird, indem eine der beiden: quer über den Stapel aufgebrachte Spannung oder Ladung, verändert wird.

3. Verfahren nach Anspruch 1 oder Anspruch 2, worin das piezoelektrische Material einen Polarisationsumkehrspannungswert, bei dem eine Polarisationsumkehr auftritt, aufweist, wobei das Verfahren die Auswahl des ersten negativen Ladungswertes (-Q2) derart umfasst, dass die Spannung quer über den Stapel (14) bei dem ersten positiven Ladungswert (+Q1) gerade größer als der Polarisationsumkehrspannungswert ist, um eine Polarisationsumkehr des Materials zu vermeiden.

4. Verfahren nach einem der Ansprüche 1 bis 3, worin das piezoelektrische Material einen Isolationsdurchschlagsspannungswert, bei dem ein dielektrischer Durchschlag auftritt, besitzt, wobei das Verfahren die Auswahl des ersten positiven Ladungswerts (+Q1) derart umfasst, dass die Spannung quer über den Stapel (14) bei dem ersten positiven Ladungswert geringer als der Isolationsdurchschlagsspannungswert während aller Stadien der Lebensdauer des Betätigungsorgans ist.

5. Verfahren nach einem der Ansprüche 1 bis 4, umfassend das Festlegen einer Betriebscharakteristik, bei der es sich um einer erste Spannungs-Ladungs-Charakteristik handelt, durch Messen der quer über den Stapel (14) aufgebrachten Spannung als Funktion der Ladung quer über den Stapel, und zwar zu dem ersten Zeitpunkt.

6. Verfahren nach Anspruch 5, umfassend das Auswählen des zweiten negativen Ladungswertes (-Q4) derart, dass eine Spannungs-Ladungs-Charakteristik bei dem gewählten zweiten negativen Ladungswert einen Gradienten (dV/dQ) besitzt, der im Wesentlichen gleich einem Gradienten der ersten Spannungs-Ladungs-Charakteristik bei dem ersten negativen Ladungswert (-Q2) ist.

7. Verfahren nach Anspruch 5, umfassend das Auswählen des zweiten positiven Ladungswertes (+Q3) derart, dass eine Spannungs-Ladungs-Charakteristik bei dem gewählten zweiten negativen Ladungswert einen Gradienten (dV/dQ) besitzt, der im wesentlichen gleich einem Gradienten der ersten Spannungs-Ladungs-Charakteristik bei dem ersten positiven Ladungswert (+Q1) ist.

8. Verfahren nach einem der Ansprüche 1 bis 4, umfassend das Festlegen einer Betriebscharakteristik, bei der es sich um eine erste Spannungs-Ladungs-Charakteristik handelt, durch Messen der quer über den Stapel (14) aufgebrachten Ladung als Funktion der Spannung quer über den Stapel, und zwar zu dem ersten Zeitpunkt.

9. Verfahren nach einem der Ansprüche 1 bis 8, umfassend das Messen eines Betriebsparameters und das Anpassen des gewählten zweiten positiven und zweiten negativen Ladungswerts um einen relativ geringen Betrag (+/-ΔQ), um den Betriebsparameter auf Maximum einzustellen, während die Differenz zwischen dem zweiten positiven und dem zweiten negativen Ladungswert (+Q3, -Q4) auf im Wesentlichen demselben Wert wie die erste Ladungsdifferenz gehalten wird.

10. Verfahren nach einem der Ansprüche 1 bis 8, umfassend das Messen eines Betriebsparameters und das Anpassen des gewählten zweiten positiven und zweiten negativen Ladungswerts um einen relativ geringen Betrag (+/-ΔQ), um den Betriebsparameter auf Minimum einzustellen, während die Differenz zwischen dem zweiten positiven und dem zweiten negativen Ladungswert (+Q3, -Q4) auf im Wesentlichen demselben Wert wie die erste Ladungsdifferenz gehalten wird.

11. Verfahren nach Anspruch 10, umfassend das Messen der dem Betätigungsorgan zugeführten Energie und Anpassen des zweiten positiven und zweiten negativen Ladungswertes (+Q3, -Q4) derart, dass die Messung der genannten zugeführten Energie auf Minimum eingestellt wird.

12. Verfahren nach Anspruch 10, umfassend das Aufbringen der Ladung quer über den Stapel unter Verwendung einer Treiberschaltung, Messen der in der Treiberschaltung verbrauchten Energie und Anpassen des gewählten zweiten positiven und zweiten negativen Ladungswerts (+Q3, -Q4), um die Messung der genannten verbrauchten Energie auf Minimum einzustellen.

13. Verfahren nach Anspruch 10, umfassend das Messen des Gesamtenergieverbrauchs des Stapels und Anpassen des gewählten zweiten positiven und zweiten negativen Ladungswerts (+Q3, -Q4) derart, dass die Messung des genannten Energieverbrauchs auf Minimum eingestellt wird.

14. Verfahren nach einem der Ansprüche 1 bis 13, worin der Schritt des Festlegens der Betriebscharakteristik zum ersten Zeitpunkt die Bezugnahme auf eine zuvor gespeicherte Betriebscharakteristik des Betätigungsorgans umfasst.

15. Verfahren nach einem der Ansprüche 1 bis 13, worin der Schritt des Festlegens der Betriebscharakteristik zum ersten Zeitpunkt das Messen der Betriebcharakteristik in Echtzeit umfasst.

16. Verfahren nach Anspruch 14 oder Anspruch 15, worin der Schritt des Festlegens der Betriebscharakteristik zum ersten Zeitpunkt das Festlegen eines Spannungswerts und eines entsprechenden Ladungswerts umfasst.

17. Verfahren nach einem der Ansprüche 1 bis 16, umfassend das Aufbringen eines Stroms (quer) durch das Betätigungsorgan, Messen der auf das Betätigungsorgan aufgebrachten Spannung und des entsprechenden Stroms und Festlegen der ersten und zweiten positiven und negativen Ladungswerte (+Q3, -Q4) durch Integration eines Momentanwerts für Strom im Verhältnis zur Zeit.

18. Verfahren zum Betrieben eines piezoelektrischen Betätigungsorgans, das einen Stapel (14) mit einem oder mehreren Elementen aus piezoelektrischem Material aufweist, wobei das Verfahren umfasst:
das Verändern der Ladung quer über den Stapel hinweg zwischen einem ersten positiven Ladungswert (+Q1) und einem ersten negativen Ladungswert (-Q2) zu einem ersten Zeitpunkt, um den Stapel um einen ersten Betrag (Z1) zwischen einem positiven Hubende und einem negativen Hubende zu versetzen, nachfolgend, zu einem späteren Zeitpunkt, das Verändern der Ladung quer über den Stapel hinweg zwischen einem zweiten positiven Ladungswert (+Q3) und einem zweiten negativen Ladungswert (-Q4), um den Stapel um einen zweiten Betrag (Z2) zu versetzen, wobei der zweite positive und der zweite negative Ladungswert (+Q3, -Q4) so gewählt werden, dass sichergestellt ist, dass ein Verlust an Betätigungsorgan-Versetzung am positiven Hubende zum späteren Zeitpunkt durch den Gewinn an Betätigungsorgan-Versetzung am negativen Hubende zum späteren Zeitpunkt im wesentlichen kompensiert wird.

19. Verfahren nach Anspruch 18, worin das piezoelektrische Material einen Polarisationsumkehrspannungswert, bei dem eine Polarisationsumkehr auftritt, besitzt, wobei das Verfahren die Auswahl des ersten und des zweiten negativen Ladungswerts (-Q2, -Q4) derart umfasst, dass die Spannung quer über den Stapel hinweg einen weniger negativen Wert besitzt als der Polarisationsumkehrspannungswert während aller Zustände des Betriebs des Betätigungsorgans.

20. Verfahren nach Anspruch 18 oder Anspruch 19, worin das piezoelektrische Material einen Isolationsdurchschlagsspannungswert, bei dem dielektrischer Durchschlag des Materials auftritt, besitzt, wobei das Verfahren die Auswahl des ersten und des zweiten positiven Ladungswertes (+Q1, +Q3) derart umfasst, dass die Spannung quer über den Stapel hinweg gerade geringer ist als der Isolationsdurchschlagsspannungswert während aller Zustände des Betriebs des Betätigungsorgans.

21. Verfahren zum Betreiben eines piezoelektrischen Betätigungsorgans, der einen Stapel (14) mit einem oder mehreren Elementen aus piezoelektrischem Material aufweist, wobei das Verfahren umfasst:
das Verändern der Ladung quer über den Stapel hinweg zwischen einem ersten positiven Ladungswert (+Q1) und einem ersten negativen Ladungswert (-Q2) zur einem ersten Zeitpunkt, um den Stapel um einen ersten Betrag (Z1) zu versetzen, nachfolgend, zu einem späteren Zeitpunkt, das Verändern der Ladung quer über den Stapel hinweg zwischen einem zweiten positiven Ladungswert (+Q3) und einem zweiten negativen Ladungswert (-Q4), um den Stapel um einen zweiten Betrag (Z2) zu versetzen, wobei der zweite positive und der zweite negative Ladungswert (+Q3, -Q4) gemäß einer zuvor festgelegten Betriebscharakteristik des Betätigungsorgans ausgewählt werden, um dadurch sicherzustellen, dass der zweite Betrag (Z2), um den das Betätigungsorgan versetzt wird, im wesentlichen derselbe wie der erste Betrag (Z1) ist.

22. Verfahren nach Anspruch 21, umfassend die Auswahl des zweiten positiven und des zweiten negativen Ladungswerts (+Q3, -Q4) gemäß einer zuvor festgelegten Betriebscharakteristik, die von einer oder mehreren der folgenden Betriebsbedingungen abhängig ist: Alter des Betätigungsorgans, Verwendungshäufigkeit des Betätigungsorgans, Temperatur des Betätigungsorgans, durchschnittlicher Zeitraum, währenddessen der positive Ladungswert auf den Stapel aufgebracht ist, durchschnittlicher Zeitraum, währenddessen der negative Ladungswert auf den Stapel aufgebracht ist.

23. Verfahren nach einem der Ansprüche 1 bis 22, bei dem die Ladung quer über den Stapel (14) hinweg während des Gebrauchs zum ersten, zu dem nachfolgenden und zu einer Mehrzahl von weiteren Zeitpunkten verändert wird.

24. Verfahren nach Anspruch 23, worin die Ladung quer über den Stapel (14) während des Betriebs des Betätigungsorgans in regelmäßigen Abständen verändert wird.

25. Verfahren nach einem der Ansprüche 1 bis 24, worin das Betätigungsorgan einen Teil eines Kraftstoffeinspritzventils mit einer Ventilnadel (10) zum Steuern der Einspritzung von Kraftstoff in einen zugehörigen Motor bildet und wobei eine Veränderung des Ladungswerts zwischen dem ersten positiven Ladungswert (+Q1) und dem ersten negativen Ladungswert (-Q2) und zwischen dem zweiten positiven Ladungswert (+Q3) und dem zweiten negativen Ladungswert (-Q4) eine Bewegung der Ventilnadel (10) zwischen Einspritz- und Nicht-Einspritz-Zuständen bewirkt.

## Revendications

1. Procédé destiné à faire fonctionner un actionneur piézoélectrique comprenant un empilage (14) d'un ou de plusieurs éléments de matériau piézoélectrique, le procédé comprenant :
dans un premier temps, (i) de faire varier la charge au travers de l'empilage entre un premier niveau de charge positive (+Q1) et un premier niveau de charge négative (-Q2) de façon à déplacer l'empilage d'une première quantité (Z1), (ii) de mesurer une première différence de charge entre le premier niveau de charge positive (+Q1) et le premier niveau de charge négative (-Q2), et (iii) de déterminer une première caractéristique de fonctionnement (dV / dQ ; dQ / dV) de l'actionneur, et
ensuite, à un moment ultérieur, de faire varier la charge au travers de l'empilage entre un second niveau de charge positive (+Q3) et un second niveau de charge négative (-Q4) de façon à déplacer l'empilage d'une seconde quantité (Z2),
moyennant quoi, les seconds niveaux de charge positive et négative sont sélectionnés en fonction de la première caractéristique de fonctionnement (dV / dQ ; dQ / dV), et de telle sorte que la différence entre le second niveau de charge positive (+Q3) et le second niveau de charge négative (-Q4) soit sensiblement la même que la première différence de charge, afin d'assurer de ce fait que la seconde quantité du déplacement (Z2) de l'actionneur soit sensiblement la même que la première quantité (Z1).

2. Procédé selon la revendication 1, dans lequel la charge au travers de l'empilage (14) est amenée à varier entre les premier et second niveaux de charge positive et négative, en faisant varier soit la tension soit la charge appliquée au travers de l'empilage.

3. Procédé selon la revendication 1 ou la revendication 2, dans lequel le matériau piézoélectrique présente un niveau de tension de polarisation inverse auquel se produit la polarisation inverse, le procédé comprenant la sélection du premier niveau de charge négative (-Q2) de telle sorte que la tension au travers de l'empilage (14) au premier niveau de charge positive (+Q1) soit juste supérieure au niveau de tension de polarisation inverse, afin d'éviter, de ce fait, la polarisation inverse du matériau.

4. Procédé selon l'une quelconque des revendications 1 à 3, dans lequel le matériau piézoélectrique présente un niveau de tension de rupture diélectrique auquel se produit la rupture diélectrique du matériau, le procédé comprenant la sélection du premier niveau de charge positive (+Q1) de telle sorte que la tension au travers de l'empilage (14) au premier niveau de charge positive soit juste inférieure au niveau de tension de rupture diélectrique à toutes les étapes de la vie de l'actionneur.

5. Procédé selon l'une quelconque des revendications 1 à 4, comprenant de déterminer, dans un premier temps, une caractéristique de fonctionnement qui soit une première caractéristique de tension et de charge, en mesurant la tension appliquée au travers de l'empilage (14) en fonction de la charge au travers de l'empilage (14).

6. Procédé selon la revendication 5, comprenant de sélectionner le second niveau de charge négative (-Q4) de telle sorte qu'une caractéristique de tension et de charge au second niveau de charge négative sélectionné, présente un gradient (dV / dQ) sensiblement égal à un gradient de la première caractéristique de tension et de charge au premier niveau de charge négative (-Q2).

7. Procédé selon la revendication 5, comprenant de sélectionner le second niveau de charge positive (+Q3) de telle sorte qu'une caractéristique de tension et de charge au second niveau de charge positive sélectionné, présente un gradient (dV / dQ) sensiblement égal à un gradient de la première caractéristique de tension et de charge au premier niveau de charge positive (+Q1).

8. Procédé selon l'une quelconque des revendications 1 à 4, comprenant de déterminer, dans un premier temps, une caractéristique de fonctionnement qui soit une première caractéristique de tension et de charge, en mesurant la charge appliquée au travers de l'empilage (14) en fonction de la tension au travers de l'empilage (14).

9. Procédé selon l'une quelconque des revendications 1 à 8, comprenant de mesurer un paramètre de fonctionnement et d'ajuster les seconds niveaux de charge positive et négative sélectionnés d'une quantité relativement petite (±ΔQ) de façon à maximaliser le paramètre de fonctionnement, tout en maintenant la différence entre les seconds niveaux de charge positive et négative (+Q3, -Q4) à une valeur sensiblement la même que la première différence de charge.

10. Procédé selon l'une quelconque des revendications 1 à 8, comprenant de mesurer un paramètre de fonctionnement et d'ajuster les seconds niveaux de charge positive et négative (+Q3, -Q4) sélectionnés d'une quantité relativement petite (±ΔQ) de façon à minimaliser le paramètre de fonctionnement, tout en maintenant la différence entre les seconds niveaux de charge positive et négative (+Q3, -Q4) à une valeur sensiblement la même que la première différence de charge.

11. Procédé selon la revendication 10, comprenant de mesurer l'énergie fournie à l'actionneur et d'ajuster les seconds niveaux de charge positive et négative (+Q3, -Q4) sélectionnés de façon à minimaliser ladite mesure d'énergie fournie.

12. Procédé selon la revendication 10, comprenant d'appliquer la charge au travers de l'empilage en utilisant un circuit d'attaque, de mesurer l'énergie dissipée dans le circuit d'attaque, et d'ajuster les seconds niveaux de charge positive et négative (+Q3, -Q4) sélectionnés de façon à minimaliser ladite mesure d'énergie dissipée.

13. Procédé selon la revendication 10, comprenant de mesurer la consommation totale d'énergie de l'empilage, et d'ajuster les seconds niveaux de charge positive et négative (+Q3, -Q4) sélectionnés de façon à minimaliser ladite mesure de consommation d'énergie.

14. Procédé selon l'une quelconque des revendications 1 à 13, dans lequel l'étape de déterminer la caractéristique de fonctionnement dans un premier temps comprend de se référer à une caractéristique de fonctionnement pré stockée de l'actionneur.

15. Procédé selon l'une quelconque des revendications 1 à 13, dans lequel l'étape de déterminer la caractéristique de fonctionnement dans un premier temps comprend de mesurer la caractéristique de fonctionnement en temps réel.

16. Procédé selon la revendication 14 ou la revendication 15, dans lequel l'étape de déterminer la caractéristique de fonctionnement dans un premier temps comprend de déterminer une valeur de tension et une valeur de charge correspondante.

17. Procédé selon l'une quelconque des revendications 1 à 16, comprenant d'appliquer un courant à travers l'actionneur, de mesurer la tension et le courant pour l'actionneur, et de déterminer les premier et second niveaux de charge positive et négative (+Q3, -Q4) sélectionnés en intégrant une valeur instantanée pour le courant par rapport au temps.

18. Procédé de fonctionnement d'un actionneur piézoélectrique comprenant un empilage (14) d'un ou de plusieurs éléments de matériau piézoélectrique, le procédé comprenant :
dans un premier temps, de faire varier la charge au travers de l'empilage entre un premier niveau de charge positive (+Q1) et un premier niveau de charge négative (-Q2) de façon à déplacer l'empilage d'une première quantité (Z1) entre une fin de course positive et une fin de course négative, ensuite, à un moment ultérieur, de faire varier la charge au travers de l'empilage entre un second niveau de charge positive (+Q3) et un second niveau de charge négative (-Q4) de façon à déplacer l'empilage d'une seconde quantité (Z2), moyennant quoi, les seconds niveaux de charge positive et négative (+Q3, -Q4) sont sélectionnés afin d'assurer que la perte de déplacement de l'actionneur en fin de course positive au moment ultérieur est sensiblement compensée par le gain de déplacement de l'actionneur en fin de course négative au moment ultérieur.

19. Procédé selon la revendication 18, dans lequel le matériau piézoélectrique présente un niveau de tension de polarisation inverse auquel se produit la polarisation inverse, le procédé comprenant la sélection des premier et second niveaux de charge négative (-Q2, -Q4) de telle sorte que la tension au travers de l'empilage ait une valeur négative inférieure au niveau de tension de polarisation inverse à toutes les étapes de fonctionnement de l'actionneur.

20. Procédé selon la revendications 18 ou la revendication 19, dans lequel le matériau piézoélectrique présente un niveau de tension de rupture diélectrique auquel se produit la rupture diélectrique du matériau, le procédé comprenant la sélection des premier et second niveaux de charge positive (+Q1, +Q3) de telle sorte que la tension au travers de l'empilage soit juste inférieure au niveau de tension de rupture diélectrique à toutes les étapes de la vie de l'actionneur.

21. Procédé de fonctionnement d'un actionneur piézoélectrique comprenant un empilage (14) d'un ou de plusieurs éléments de matériau piézoélectrique, le procédé comprenant :
dans un premier temps, de faire varier la charge au travers de l'empilage entre un premier niveau de charge positive (+Q1) et un premier niveau de charge négative (-Q2) de façon à déplacer l'empilage d'une première quantité (Z1), ensuite, à un moment ultérieur, de faire varier la charge au travers de l'empilage entre un second niveau de charge positive (+Q3) et un second niveau de charge négative (-Q4) de façon à déplacer l'empilage d'une seconde quantité (Z2), moyennant quoi, les seconds niveaux de charge positive et négative (+Q3, -Q4) sont sélectionnés selon une caractéristique de fonctionnement prédéterminée de l'actionneur, afin d'assurer, de ce fait, que la seconde quantité (Z2) dont est déplacé l'actionneur est sensiblement la même que la première quantité (Z1).

22. Procédé selon la revendication 21, comprenant de sélectionner les seconds niveaux de charge positive et négative (+Q3, -Q4) selon une caractéristique de fonctionnement prédéterminée qui est dépendante d'une ou de plusieurs des conditions de fonctionnement suivantes : âge de l'actionneur, fréquence d'utilisation de l'actionneur, température de l'actionneur, durée moyenne d'application du niveau de charge positive à l'empilage, durée moyenne d'application du niveau de charge négative à l'empilage.

23. Procédé selon l'une quelconque des revendications 1 à 22, moyennant quoi la charge au travers de l'empilage (14) est amenée à varier au premier temps, au moment ultérieur, et une pluralité d'autres fois, en utilisation.

24. Procédé selon la revendication 23, moyennant quoi la charge au travers de l'empilage (14) est amenée à varier à des intervalles réguliers au cours du fonctionnement de l'actionneur.

25. Procédé selon l'une quelconque des revendications 1 à 24, dans lequel l'actionneur forme une partie d'un injecteur de carburant comportant un pointeau de soupape (10) destiné à contrôler l'injection du carburant dans un moteur thermique associé, et moyennant quoi une variation dans le niveau de charge entre le premier niveau de charge positive (+Q1) et le premier niveau de charge négative (-Q2), et entre le second niveau de charge positive (+Q3) et le second niveau de charge négative (-Q4), provoque le mouvement du pointeau de soupape (10) entre des états d'injection et de non injection.
